# EUROPEAN PATENT SPECIFICATION

(11) **EP 4 363 462 B1**
(45) Date of publication and mention of the grant of the patent: **10.09.2025**
(21) Application number: 22738406.2
(22) Date of filing: 23.06.2022
(51) Int. Cl.: C08F 36/02, C08F 283/06, C08F 293/00, C10M 107/38, C10M 119/22, C08L 53/00, C08F 8/22

(54) **COPOLYMERS COMPRISING (PER)FLUOROPOLYETHER CHAINS**
COPOLYMERE MIT (PER)FLUORPOLYETHER-KETTEN
COPOLYMÈRES COMPRENANT DES CHAÎNES (PER)FLUOROPOLYÉTHER

(30) Priority: 01.07.2021 EP 21183081
(43) Date of publication of application: 08.05.2024
(73) Proprietor: Syensqo Specialty Polymers Italy S.p.A., 20021 Bollate (MI) (IT)
(72) Inventor: DE PATTO, Ugo, 20815 Cogliate (MB) (IT); LOTIERZO, Andrea, 20861 Brugherio (MB) (IT); GUARDA, Pier Antonio, 20020 ARESE (MI) (IT)
(74) Representative: Viola, Laura Maria
(86) International application number: PCT/EP2022/067109
(87) International publication number: WO 2023/274821

(56) References cited:
- US-B2- 8 258 090
- KRUKOVSKY S P ET AL: "New fluorine-containing oligomers and polymers", JOURNAL OF FLUORINE CHEMISTRY, ELSEVIER, NL, vol. 96, no. 1, 24 June 1999 (1999-06-24), pages 31 - 33, XP004169811, ISSN: 0022-1139, DOI: 10.1016/S0022-1139(98)00324-8
- SIANESI D ET AL: "PERFLUOROPOLYETHERS (PFPES) FROM PERFLUOROOLEFIN PHOTOOXIDATION", ORGANOFLUORINE CHEMISTRY PRINCIPLES AND COMMERCIAL APPL, XX, XX, 1 January 1994 (1994-01-01), pages 431 - 461, XP001061330

## Description

### Technical Field

The present patent application relates to copolymers comprising (per)fluoropolyether chains, characterized by increased viscosity.

### Background Art

Lubrication is an important aspect of maintaining machinery in proper operating condition. Machine elements such as bearings, pins, shafts, gears and joints require proper lubrication between their moving surfaces to decrease friction, prevent contamination, reduce wear and dissipate heat. Improper lubrication is likely to lead to premature component wear and component or system failure.

(Per)fluoropolyether polymers (in the following referred to as "PFPE polymers") have been long known as base oils or as additives in several lubricant applications.

Several syntheses of PFPE polymers have been disclosed in the art. The first synthesis of unspecified perfluorinated polyether mixtures was reported in 1953, when an oily product was obtained in the course of photo-oligomerization of hexafluoropropene. Since then, a number of different perfluorinated polyethers have been synthesized and described in literature.

US 4,500,739 (in the name of Montedison**)** discloses the reaction of a peroxidic PFPE with - among the others - perfluoro butadiene (Group II of fluoroolefins). Example 4 discloses the reaction with perfluoro butadiene, with a large excess of perfluorinated bis-olefin, resulting in pendant unsaturated groups along the macromolecular chain such that the reaction can further proceed in the presence of hexamethylenediamine.

US 8,258,090 B2 (in the name of Solvay Solexis S.p.A.**)** discloses fluorinated lubricants of formula:

(I) T-O-[A-B]z-[A'-B']z'-A-T

wherein
T and T' are C₁₋₃ perfluoroalkyl or C₁₋₆ alkyl,
A and A are a perfluoropolyether chain,
B derives from two different olefins, of which at least one homopolymerizable by radical route, of formula:

   (Ia) -[(CR₁R₂-CR₃R₄)ⱼ-(CR₅R₆-CR₇R₈)_{j'}]-
wherein
j is from 1 to 5, j' is from 0 to 4 and the sum of j+j' is between 2 and 5;
R₁ to R₈ are halogen, H, C₁₋₆ (per)haloalkyl, C₁₋₆ alkyl, C₁₋₆ oxy(per)fluoroalkyl;
z is higher than or equal to 2, z' is an integer and the sum of z and z' is such that the number average molecular weight of the polymer of formula (I) is in the range 500-500000;
B' is (Ia) but at least one of R1 to R8 has a meaning different than that in B.
This patent discloses block copolymers characterized by a linear backbone, in other words no branching is obtained from groups of formula B.

Polymers obtained using PFPE polymeric units have been disclosed in the art. Crossed-linked fluoroelastomers are among those. On this regard, S.P. Krukovsky et al. - J of Fluorine Chemistry 96 (1999) 31-33 - disclosed copolymerization of perfluoroalkyleneoxides containing peroxide groups in the chain with perfluorodivinyl ethers under UV radiation and heating to provide cross-linked polymers, referred to as elastomers. This document does not disclose any amount for the reactants, and does not address a method for manufacturing polymers suitable for use for lubricants.

### Summary of invention

While research and development in the recent years focused on mono- and/or bifunctional (per)fluoropolyether (PFPE) polymers, the Applicant perceived that there is still the need for providing neutral PFPE polymers that can be used as lubricants.

The Applicant faced the problem of providing new neutral PFPE polymers characterized by an increased viscosity (as measured by complex viscosity at 0.1 rad/s at 25°C), while maintaining low glass transition temperature (Tg) and still being in the liquid state at room temperature.

The Applicant surprisingly found that neutral branched (per)fluoropolyether polymers characterized by increased viscosity, due to an increase of the number average molecular weight, can be provided via a process easy to implement on industrial scale.

Advantageously, the process allows to manufacture neutral (per)fluoropolyether polymers having high thermal stability while maintaining a low glass transition temperature and increasing the viscosity index (ASTM D2270), such that such polymers are particularly useful as lubricants in harsh environments, including for example applications requiring wide range of working temperatures or high heat generation.

In a first aspect, the present invention relates to a block copolymer [copolymer (P)] having two chain ends, wherein both said chain ends comprise a perfluorinated alkyl group, and comprising a first and a second (per)fluoropolyether chain [PFPE chain] each having two chain ends, wherein the first chain end of said first and second PFPE chain comprises a perfluorinated alkyl group and the second chain end of said first and second PFPE chain are bonded to each other via a block of formula (I):

(I) -[A-B]-

wherein
(A) is a PFPE chain, and
(B) is a moiety complying with the following formula (II): 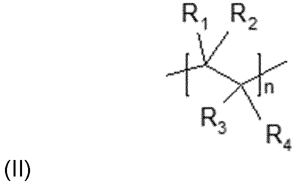
wherein
n is an integer from 1 to 3;
R₁ to R₄, each independently, is selected in the group comprising, preferably consisting of, fluorine atom, perfluorinated linear or branched alkyl group having from 1 to 6 carbon atoms, group of formula (III):

   (III) -(R₁₀)ₜ[C(R₁₁)(R₁₂)-C(R₁₃)(R₁₄)(R₁₅)]_{z}
wherein
R₁₀ is an oxygen atom, or a bi-/tri-/tetravalent perfluorinated alkyl chain comprising from 1 to 24 carbon atoms optionally interrupted by and/or comprising at least one oxygen atom,
t is zero or 1,
z is an integer from 1 to 3;
R₁₁ to R₁₅, each independently, is selected in the group comprising, preferably consisting of, fluorine atom, perfluorinated linear or branched alkyl group having from 1 to 6 carbon atoms and group of formula (IV):

   -[(A^)ₐ-(B^)ᵥ]-(C^)-T (IV)
wherein
A^ is a PFPE chain,
a is zero or 1,
v is zero or an integer from 1 to 3,
B^ is a group of formula -[C(R^{1^})(R^{2^})-C(R^{3^})(R^{4^})]-
wherein R^{1^} to R^{4^} each independently has the meaning defined above for R₁ to R₄,
C^ is a PFPE chain, and
T is a perfluorinated alkyl group;
wherein:
   -- said A and B in formula (I) and said A^ and B^ in formula (IV) are statistically distributed,
   -- at least one of R₁ to R₄ is a group of formula (III),
   -- one of R₁₁ or R₁₂ and one of R₁₃ to R₁₅, is a group of formula (IV) wherein a is 1, and
   -- the sum of (B + B^) is from 1 to 15.

In a second aspect, the present invention relates to a process [process (P)] for the manufacture of copolymer (P) as defined above, said process comprising the steps of :
a) contacting at least one peroxidic (per)fluoropolyether polymer [PFPE peroxy] with at least one perfluorinated compound of formula (III-p): 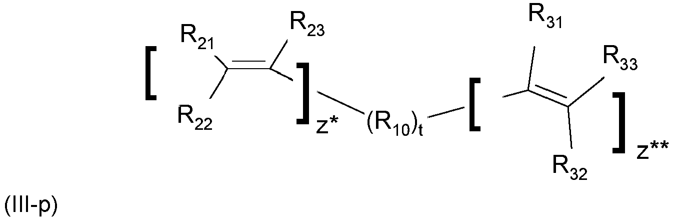 wherein
   each of R₂₁ to R₂₃ and R₃₁ to R₃₃ is independently fluorine atom, perfluorinated linear or branched alkyl group having from 1 to 6 carbon atoms,
   R₁₀ is an oxygen atom, a perfluorinated linear or branched alkyl group comprising from 1 to 24 carbon atoms, optionally interrupted by and/or comprising at least one oxygen atom,
   t is zero or 1, preferably 1;
   each of z* and z** is independently 1 or 2;
   wherein
   the amount of the compound of formula (III-p) is less than 5 wt.% of the amount of the PFPE peroxy;
b) letting the PFPE peroxy and the compound of formula (III) react in the presence of UV radiation or heating;
c) fluorinating, thus obtaining said copolymer (P).

In the process according to the present invention, it is important that the number of equivalents of unsaturated moieties of formula (III-p) is properly selected to be lower than the moles of peroxidic units in the PFPE peroxy, so that branched block copolymers (P) free from unsaturated moieties as pendant groups (also referred to as "functional groups") are obtained.

Copolymer (P) is advantageously free from pendant groups comprising any moiety capable of undergoing a further chemical reaction. In particular, copolymer (P) is free from unsaturated moieties as pendant groups.

In a third aspect, the present invention relates to copolymer (P) obtained via process (P) described above.

While purification steps can be performed after step (c), it will be clear to those skilled in the art that the copolymers (P) according to the present invention are obtained at the end of step (c) of process (P) as a mixture.

Thus, in a further aspect, the present invention relates to a mixture [mixture (P)] comprising two or more copolymers (P) as defined above.

It will be clear to those skilled in the art that mixture (P) is obtained via process (P) as described above.

Advantageously, said mixture (P) can be subjected to one or more purification steps (also referred to as "fractionation" steps), thus obtaining separate copolymers (P) characterized by different viscosities.

In a further aspect, the present invention relates to a method for lubricating at least one surface of at least one article, said method comprising contacting said copolymer (P) or said mixture (P) with said at least one surface.

### Description of embodiments

For the purpose of the present description and of the following claims:
- the use of parentheses around symbols or numbers identifying the formulae, for example in expressions like "polymer (P)", etc., has the mere purpose of better distinguishing the symbol or number from the rest of the text and, hence, said parenthesis can also be omitted;
- the acronym "PFPE" stands for "(per)fluoropolyether" and, when used as substantive, is intended to mean either the singular or the plural form, depending on the context;
- the term "(per)fluoropolyether" is intended to indicate a fully or partially fluorinated polyether polymer.

Preferably, in copolymer (P), the first PFPE chain, the second PFPE chain, A, A^, C^ are the same or different from each other.

Preferably, said perfluorinated alkyl groups are the same or different from each other.

Preferably, said perfluorinated alkyl group is a linear perfluoroalkyl group comprising from 1 to 3 carbon atoms.

Preferably, in copolymer (P), said at least one first PFPE chain is bonded to said at least one block of formula (I) via a sigma bond or a group selected from -CF₂-, -CF₂CF₂- or -O-.

Preferably, in copolymer (P), said second PFPE chain is bonded to said at least one block of formula (I) via a sigma bond or a group selected from -CF₂-, -CF₂CF₂- or -O-.

Preferably, in copolymer (P), (A) and (B) in formula (I) are linked via a sigma bond or a group selected from -O-, -CF₂- or -CF₂CF₂-.

Preferably, in copolymer (P), each of said first PFPE chain, second PFPE chain, A in formula (I) and said A^ and C^ in formula (IV) is a partially or fully fluorinated chain [chain (R_{f})] comprising, preferably consists of, repeating units being independently selected from the group consisting of:
(Rf-i) -CFXO-, wherein X is F or CF₃;
(Rf-ii) -CFXCFXO-, wherein X, equal or different at each occurrence, is F or CF₃, with the proviso that at least one of X is -F;
(Rf-iii) -CF₂CF₂CW₂O-, wherein each of W, equal or different from each other, are F, Cl, H;
(Rf-iv) -CF₂CF₂CF₂CF₂O-;
(Rf-v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, - CF₂CF₂CF₂CF₂O-, with each of X being independently F or CF₃ and T being a C₁-C₃ perfluoroalkyl group.

Preferably, said chain (R_{f}) complies with the following formula:

(R_{f}-I) -[(CFX¹O)_{g1}(CFX²CFX³O)_{g2}(CF₂CF₂CF₂O)_{g3}(CF₂CF₂CF₂CF₂O)_{g4}]-

wherein
- X¹ is independently selected from -F and -CF₃,
- X², X³, equal or different from each other and at each occurrence, are independently -F, -CF₃, with the proviso that at least one of X is -F;
- g1, g2, g3, and g4, equal or different from each other, are independently integers ≥0, such that g1+g2+g3+g4 is in the range from 2 to 1000; should at least two of g1, g2, g3 and g4 be different from zero, the different recurring units are generally statistically distributed along the chain.

More preferably, chain (R_{f}) is selected from chains of formula:

(R_{f}-IIA) -[(CF₂CF₂O)ₐ₁(CF₂O)ₐ₂]-

wherein:
- a1 and a2 are independently integers ≥ 0 such that the number average molecular weight is between 1,000 and 100,000; both a1 and a2 are preferably different from zero, with the ratio a1/a2 being preferably comprised between 0.1 and 10;

   (R_{f}-IIB) -[(CF₂CF₂O)_{b1}(CF₂O)_{b2}(CF(CF₃)O)_{b3}(CF₂CF(CF₃)O)_{b4}]-

   wherein:
   b1, b2, b3, b4, are independently integers ≥ 0 such that the number average molecular weight is between 1,000and 100,000; preferably b1 is 0, b2, b3, b4 are > 0, with the ratio b4/(b2+b3) being ≥1;

      (R_{f}-IIC) -[(CF₂CF₂O)_{c1}(CF₂O)_{c2}(CF₂(CF₂)_{cw}CF₂O)_{c3}]-
   wherein:
      cw = 1 or 2;
      c1, c2, and c3 are independently integers ≥ 0 chosen so that the number average molecular weight is between 1,000and 100,000; preferably c1, c2 and c3 are all > 0, with the ratio c3/(c1+c2) being generally lower than 0.2.

Still more preferably, chain (R_{f}) complies with formula (R_{f}-III) here below:

(R_{f}-III) -[(CF₂CF₂O)ₐ₁(CF₂O)ₐ₂]-

wherein:
- a1, and a2 are integers > 0 such that the number average molecular weight is between 1,000and 100,000 with the ratio a1/a2 being generally between 0.1 and 10, more preferably between 0.2 and 5.

Preferably, in formula (II), n is an integer equal to 1 or 2, more preferably 1.

Preferably, in formula (II), at least one of substituents R₁ to R₄ is a group of formula (III) and the other substituents are each independently selected from a fluorine atom or a perfluorinated alkyl chain having from 1 to 3 carbon atoms, more preferably a fluorine atom or a perfluorinated alkyl chain having 1 carbon atoms.

According to one embodiment, in formula (III), t is 0.

According to another embodiment, in formula (III), t is 1 and
R₁₀ complies with one of the following formulae:

(R₁₀-i) -(CF₂)_{d}(O)ₑ(CF₂O)_{f}R_{CF}(O)ₑ-(CF₂)_{d}-(CF2O)_{f*}

wherein
each of d, d*, e, e*, f and f* is independently zero or 1 and R_{CF} is a perfluoroalkyl chain comprising from 1 to 12, preferably from 1 to 8 carbon atoms, optionally interrupted by one or more oxygen atoms (R₁₀-ii) -O-(C₃F₆O)ₕ-(CF₂)ᵢ-(OC₃F₆)ⱼ-O-
wherein h = j and h + j is from 2 to 6, and i is from 2 to 6.

According to this embodiment, preferably R₁₀ complies with formula:

(R₁₀-i) -(CF₂)_{d}(O)ₑ(CF₂O)_{f}R_{CF}(O)ₑ-(CF₂)_{d}-(CF2O)_{f*}

wherein
d, f, d* and f* are zero,
e and e* are 1, and
R_{CF} is a linear perfluoroalkyl chain comprising from 1 to 10, preferably from 1 to 8 carbon atoms

Preferably, in formula (III), z is equal to 1 and R₁₀ is an oxygen atom or a bivalent perfluorinated alkyl chain comprising from 1 to 24 carbon atoms, optionally interrupted by and/or comprising at least one oxygen atom.

Preferably, in formula (III), one of substituents R₁₁ and R₁₂ is a group of formula (IV) and the other substituent is selected from a fluorine atom or a perfluorinated alkyl chain having from 1 to 3 carbon atoms, more preferably a fluorine atom or a perfluorinated alkyl chain having 1 carbon atoms.

Preferably, in formula (III), one of substituents R₁₃ to R₁₅ is a group of formula (IV) and the other two substituents are independently selected from a fluorine atom or a perfluorinated alkyl chain having from 1 to 3 carbon atoms, more preferably a fluorine atom or a perfluorinated alkyl chain having 1 carbon atoms. More preferably said two substituents are the same and are a fluorine atom.

Preferably, in formula (IV), a is 1, v is 1 and B^ is a group of formula
- [C(R^{1^})(R^{2^})-C(R^{3^})(R^{4^})]- wherein R^{1^} to R^{4^} each independently are the same as each of R₁ to R₄, respectively.

Preferably, copolymer (P) is characterized by a complex viscosity, measured at 0.1 rad/s and at 25°C, from 10 Pa*s to 5000 Pa*s.

According to the present invention, said copolymer (P) is obtained via process (P) as described above.

Before step (a), the PFPE peroxy can be subjected to partial reduction of the peroxid bonds, for example by chemical reduction or UV treatment or thermal treatment.

Preferably, said PFPE peroxy is a peroxidic (per)fluoropolyether polymer comprising a (per)fluoropolyether chain having two chain ends, each of said chain ends comprising a (per)fluorinated alkyl chain having from 1 to 3 carbon atoms, optionally containing one or more chlorine atoms or functional end groups selected from acyl fluoride, fluoroformate and ketones, said chain ends being bonded to opposite sides of said (per)fluoropolyether chain, said (per)fluoropolyether chain comprising, preferably consisting of, repeating units being independently selected from the group consisting of formulae (Rf-i) to (Rf-v) as above defined and having a peroxidic content (PO), defined as grams of active oxygen (Mw = 16) in 100 g of PFPE peroxy between 0.1 and 4, preferably between 0.1 and 3.5.

Preferably, in said compound of formula (III-p), when t is 1, the two, three or four unsaturated moieties are bonded to the same or different atoms, preferably carbon atoms, belonging to R₁₀.

Preferably, said at least one compound of formula (III-p) complies with the following formula:

CF₂=CF(R₁₀)ₜCF=CF₂

wherein
t is zero or 1,
R₁₀ complies with one of the following formulae:

   (R₁₀-i) -(CF₂)_{d}(O)ₑ(CF₂O)_{f}R_{CF}(O)ₑ-(CF₂)_{d}-(CF2O)_{f*}
wherein
each of d, d*, e, e*, f and f* is independently zero or 1 and R_{CF} is a perfluoroalkyl chain comprising from 1 to 12, preferably from 1 to 8 carbon atoms, optionally interrupted by one or more oxygen atoms

   (R₁₀-ii) -O-(C₃F₆O)ₕ-(CF₂)ᵢ-(OC₃F₆)ⱼ-O-
wherein h = j and h + j is from 2 to 6, and i is from 2 to 6.

Preferably, said compound of formula (III-p) is selected from the group comprising, more preferably consisting of:

CF₂=CFCF=CF₂

CF₂=CFOCF=CF₂

CF₂=CFCF₂OCF₂CF=CF₂

CF₂=CFO-(CF₂)₃CF=CF₂

CF₂=CFCF₂O(CF₂)₃OCF₂-CF=CF₂

CF₂=CFCF₂CF=CF₂

CF₂=CF(CF₂)₂CF=CF₂

CF₂=CF(CF₂)₃CF=CF₂

CF₂=CF(CF₂)₄CF=CF₂

CF₂=CFOCF₂OCF=CF₂

CF₂=CFO(CF₂)₂OCF=CF₂

CF₂=CFO(CF₂)₃OCF=CF₂

CF₂=CFO(CF₂)₄OCF=CF₂

CF₂=CF(CF₂)₂OCF=CF₂

CF₂=CF(CF₂)₃OCF=CF₂

CF₂=CF(CF₂)₄OCF=CF₂

CF₂=CFCF₂O(CF₂)₂OCF₂O-CF=CF₂

CF₂=CFCF₂O(CF₂)₃OCF₂O-CF=CF₂

CF₂=CFCF₂O(CF₂)₄OCF₂OCF=CF₂

CF₂=CFCF₂O(CF₂)₆OCF₂CF=CF₂

CF₂=CFO-CF₂O-(CF₂)₂O-CF₂O-CF=CF₂

CF₂=CFO-CF₂O-(CF₂)₃O-CF₂O-CF=CF₂

CF₂=CFO-CF₂O-(CF₂)₄O-CF₂O-CF=CF₂

CF₂=CFO-(CF₂O)₆-CF=CF₂

CF₂=CFO-(CF₂CF₂O)₂-CF=CF₂

CF₂=CFO-(CF₂CF₂O)₂-CF₂OCF= CF₂

CF₂=CFO(C₃F₆O)ₕ-(CF₂)ᵢ-(OC₃F₆)ⱼ-OCF=CF₂

wherein h and j are the same and
their sum is from 2 to 6 and i is from 2 to 6.

According to a particularly preferred embodiment, said at least one compound of fowhereinrmula (III-p) complies with the following formula:

CF₂=CF(R₁₀)ₜCF=CF₂

wherein t is 1 and
R₁₀ complies with formula:

   (R₁₀-i) -(CF₂)_{d}(O)ₑ(CF₂O)_{f}R_{CF}(O)ₑ-(CF₂)_{d}-(CF2O)_{f*}

   wherein
d, f, d* and f* are zero,
e and e* are 1, and
R_{CF} is a linear perfluoroalkyl chain comprising from 1 to 10, preferably from 1 to 8 carbon atoms.

Preferably, in step (a), the amount of the compound of formula (III-p) is less than 3 wt.%, even more preferably less than 1 wt.%, of the amount of the PFPE peroxy.

It will be easily understood by those skilled in the art, that as the reaction proceeds and copolymer (P) is obtained, the unsaturated moieties in compound of formula (III-p) become saturated moieties in copolymer (P), such that substituents R₂₁ to R₂₃ in formula (III-p) become substituents R₁ to R₃ in formula (III) of copolymer (P), substituent R₃₁ become any of substituents R₁₁ or R₁₂ in formula (III) and substituents R₃₂ and R₃₃ become any of substituents R₁₃ to R₁₅ in formula (III) of copolymer (P).

Step (a) and step (b) can be performed in the presence of a fluorinated solvent. Preferably said fluorinated solvent is selected in the group comprising:
perfluorocarbons, hydrofluorocarbons, perfluoropolyethers, hydrofluoropolyethers.

Preferably, step (b) is performed in the presence of UV radiation for a time from 2 to 60 hours.

Preferably, step (b) is performed in the presence of UV radiation at a temperature from -60°C to +60°C, more preferably from -20°C to +40°C and even more preferably from 0°C to 30°C.

As an alternative, step (b) can be performed under thermal treatment, preferably by heating at a temperature from 100 °C to 250 °C.

It will be clear to those skilled in the art that the polymer obtained at the end of step (b) has a peroxide content (PO) lower than 0.05, preferably lower than 0.001.

Preferably, said step (c) is performed by treating with fluorine in the presence of anhydrous nitrogen flow.

Preferably, said process (P) comprises after step (c), step (d) of removal of the solvent and/or step (e) of fractionation.

Said step (d) of removal of the solvent can be carried out by evaporation, for example by distillation under vacuum.

Said step (e) of fractionation can be performed via solvent extraction, using supercritical CO₂, hexafluoroxylene or hydrofluorocarbons as solvents, and mixtures thereof when the fractionation step is performed via precipitation fractionation. Supercritical CO₂ is preferred.

As explained above, purification steps can be performed after step ^{©} or step (d), it will be clear to those skilled in the art that the copolymers (P) according to the present invention are obtained at the end of step (c) or of step (d) of process (P) as mixture (P), wherein copolymers (P) characterized by different viscosities and/or molecular weight and/or substituents are present.

Copolymer (P) is advantageously used as lubricant, notably for application in harsh environments, for example subjected to a wide range of working temperatures.

Copolymer (P) or mixture (P) can be used as such, or in admixture with additive(s) known to the person skilled in the art of lubrication, so that a composition [composition (CL)] is obtained.

For example, composition (CL) can comprise other suitable lubricants as base oil, such base oil being selected in the group comprising partially fluorinated, fully fluorinated and hydrogenated base oils, provided that said base oil is capable of forming a solution with copolymer (P).

Non-limiting examples of fully fluorinated lubricant base oils are those identified as compounds (1) - (8) in EP 2100909 A (SOLVAY SOLEXIS S.p.A.).

For example, suitable additives are selected from thickening agents, antirust agents, antioxidants, thermal stabilizers, pour-point depressants, anti-wear agents, including those for high pressures, dispersants, tracers, dyestuffs, talc and inorganic fillers.

Examples of thickening agents are talc, silica, boron nitride, polyureas, alkali or alkali-earth metals terephthalates, calcium and lithium soaps and complexes thereof and PTFE (polytetrafluoroethylene); among them, PTFE is preferred.

Examples of dispersants are, for example, surfactants, preferably non-ionic surfactants, more preferably (per)fluoropolyether surfactants and (per)fluoroalkyl surfactants.

If required by the application, solvents can also be used.

Examples of solvents are fluorinated or partially fluorinated solvents, such as Galden^{®} PFPEs, Novec^{®} HFEs and other organic solvents like fluoro-alkane, fluoro-aromatic compound, fluoroalkyl ether, fluoroalkyl amine, fluoro-alcohol, ketone such as methyl-ethyl-ketone, alcohol such as isopropyl alcohol, ester such as butylacetate, hydrofluorocarbons, and the like.

The article that can benefit from the lubricant properties of copolymer (P), mixture (P) or composition (CL) according to the present invention is not particularly limited.

Said article preferably comprises at least one metal surface.

Examples of said article are pumps for use in oil and gas applications, such as electrical submersible pump and the like, rotary machines, such as steam turbines and gas turbines; electrical connectors; bearings of fan clutches or cooling fans; or heavy duty truck automatic clutches, more particularly bearings of said clutches.

Copolymer (P), mixture (P) or composition (CL) according to the present invention can be advantageously used as damper fluids in a damping device.

Thus, in a further aspect, the present invention relates to a method for counteract vibrations and/or shocks in a device, said method comprising providing an apparatus comprising a damper device, said damper device comprising at least one copolymer (P), mixture (P) or composition (CL) as defined above.

The invention will be now described in connection with the following examples, whose purpose is merely illustrative and not intended to limit the scope of the invention.

### Experimental section

### Materials

Peroxidic perfluoropolyether oil having formula

T-O-(CF₂CF₂O)ₘ(CF₂O)ₙ-(O)ₕ-T'

number average molecular weight (Mₙ) = 48600 g/mol,
m/n = 1.0 and PO=1.65%
T, T' = -CF₃ (83%), -C(=O)F (6%), -CF₂C(=O)F (11%)
was obtained by Solvay Specialty Polymers Italy S.p.A..

Galden^{®} HT200 were obtained by Solvay Specialty Polymers Italy S.p.A..

Perfluoro(bis vinyl ether) (PBVE) was obtained by Anles Ltd..

Hexafluorobenzene was obtained by Sigma Aldrich.

### Methods

### 19F-NMR spectroscopy:

Varian Mercury 200 MHz spectrometer working for the fluorine nucleus was used to obtain the structure, the number average molecular weight and the composition of the PFPE oils reported in the following examples. The ¹⁹F-NMR spectrum was obtained on pure samples using CFCl₃ as internal reference. Hexafluorobenzene was also used as solvent.

### Determination of the peroxidic content (PO):

The peroxidic content (PO) is expressed as grams of peroxidic oxygen per 100 g of polymer. The analysis of the peroxide content was carried out by iodometric titration using a Mettler DL40 device equipped with platinum electrode. The sensitivity limit for the PO determination was 0.0002%.

### Determination of the complex viscosity:

The complex viscosity was measured with frequency sweep tests using an MCR502 Anton-Paar rheometer with parallel plate geometry (25mm diameter) according to ISO 6721 part 10.

### Gel permeation chromatography (GPC):

The analysis was performed with Mixed CCD column with a Waters 410 refractometer detector using HFE7100 as eluent.

### Example 1 - Synthesis of copolymer (P-1)

The reaction was performed using a 1000mL cylindrical photochemical glass reactor equipped with a high-pressure mercury lamp (HANAU TQ150) enclosed in a quartz cylinder, a magnetic stirrer, a thermocouple and a condenser.

200.3 g of the starting peroxidic perfluoropolyether oil were charged in the photochemical reactor together with 1501 g of Galden^{®} HT200 and 1.30 g of PBVE and stirred thoroughly to obtain a homogenous mixture. The reaction mixture was then cooled down to about 10°C with an ice/water bath and nitrogen was purged into the system at a rate of 1.0 NI/h. The UV lamp was switched on.

After 55 hours of irradiation, the lamp was switched off and the reaction mixture was transferred into a second glass reactor and fluorinated at 40°C with 1.0 NI/h of fluorine gas for a total of 24 hours in the presence of UV radiation. ¹⁹F-NMR analysis confirmed the complete fluorination of the product and the absence of - CF₂COF and -COF terminals at the chain ends.

The obtained solution was distilled at 240°C for 4h in a round bottom flask equipped with a magnetic stirrer in order to remove the solvent.

The distillation was conducted first at atmospheric pressure, then under reduced pressure (0.1 mbar) until complete removal of the solvent.

163.6g of copolymer (P-1) in the form of a clear viscous oil were obtained as residue, which was analyzed by iodometric titration to confirm the complete removal of the peroxide units.

¹⁹F-NMR analysis confirmed the absence of residual peroxide. Polymer (P-1) had m/n = 1.0 and T, T'= -CF₃.

### Example 2 - Synthesis of comparative polymer (C-1^) without PBVE

The same photochemical apparatus and peroxidic perfluoropolyether precursor as Example 1 were adopted for this comparative example.

199.9 g of the starting peroxidic perfluoropolyether oil were charged in the photochemical reactor together with 1502 g of Galden^{®} HT200 and stirred thoroughly to obtain a homogenous mixture.

The synthesis then proceeded as described in Example 1. ¹⁹F-NMR analysis confirmed the complete fluorination of the product and the absence of -CF₂COF and -COF terminals at the chain ends.

Distillation was also performed as described in Example 1.

172.4 g of comparative polymer (C-1^) were obtained in the form of a clear viscous oil were obtained as residue, which was analyzed by iodometric titration to confirm the complete removal of the peroxide units.

¹⁹F-NMR analysis confirmed the absence of residual peroxide. Comparative copolymer (C-1^) had m/n = 1.0 and T, T'= -CF₃.

**Table 1**

| | **Mn g/mol** | **Mw g/mol** | **Mw/M** | **Complex viscosity (at 0.1 rad/s and 25°C)** | **Viscosity index (ASTM D2270)** |
|---|---|---|---|---|---|
| **Copolymer (P-1)** | 52100 | 323000 | 6.2 | 57.5 Pa*s | 559 mm²/s |
| **Comparative polymer (C-1^)** | 24000 | 63000 | 2.6 | 5.6 Pa*s | 380 mm²/s |

The increased molecular weight distribution and complex viscosity of copolymer (P-1) according to the present invention confirmed the chain extension with respect to the comparative polymer (C-1^).

## Claims

1. A block copolymer [copolymer (P)] having two chain ends, wherein both
said chain ends comprise a perfluorinated alkyl group, and comprising a first and a second (per)fluoropolyether chain [PFPE chain] each having two chain ends, wherein the first chain end of said first and second PFPE chain comprises a perfluorinated alkyl group and the second chain end of said first and second PFPE chain are bonded to each other via a block of formula (I):
(I) -[A-B]-
wherein
(A) is a PFPE chain, and
(B) is a moiety complying with the following formula (II): 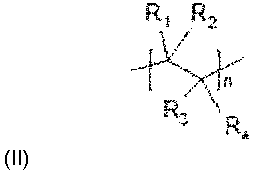
wherein
n is an integer from 1 to 3;
R₁ to R₄, each independently, is selected in the group comprising, preferably consisting of, fluorine atom, perfluorinated linear or branched alkyl group having from 1 to 6 carbon atoms, group of formula (III):
(III) -(R₁₀)ₜ[C(R₁₁)(R₁₂)-C(R₁₃)(R₁₄)(R₁₅)]_{z}
wherein
R₁₀ is an oxygen atom, or a bi-/tri-/tetravalent perfluorinated alkyl chain comprising from 1 to 24 carbon atoms, optionally interrupted by and/or comprising at least one oxygen atom,
t is zero or 1,
z is an integer from 1 to 3;
R₁₁ to R₁₅, each independently, is selected in the group comprising, preferably consisting of, fluorine atom, perfluorinated linear or branched alkyl group having from 1 to 6 carbon atoms and group of formula (IV):
-[(A^)ₐ-(B^)ᵥ]-(C^)-T (IV)
wherein
A^ is a PFPE chain,
a is zero or 1,
v is zero or an integer from 1 to 3,
B^ is a group of formula -[C(R^{1^})(R^{2^})-C(R^{3^})(R^{4^})]-
wherein R^{1^} to R^{4^} each independently has the meaning defined above for R₁ to R₄ ,
C^ is a PFPE chain, and
T is a perfluorinated alkyl group;
wherein:
-- said A and B in formula (I) and said A^ and B^ in formula (IV) are statistically distributed,
-- at least one of R₁ to R₄ is a group of formula (III),
-- one of R₁₁ or R₁₂ and one of R₁₃ to R₁₅, is a group of formula (IV) wherein a is 1, and
-- the sum of (B + B^) is from 1 to 15.

2. Copolymer (P) according to Claim 1, wherein
- said first and second PFPE chain, said A, A^ , C^ as defined in Claim 1 are the same or different from each other; and/or
- each of said perfluorinated alkyl groups, being the same or different from each others, are a linear perfluoroalkyl group comprising from 1 to 3 carbon atoms; and/or
- said first PFPE chain is bonded to said at least one block of formula (I) via a sigma bond or a group selected from -CF₂-, -CF₂CF₂- or -O-; and/or
- said second PFPE chain is bonded to said at least one block of formula (I) via a sigma bond or a group selected from -CF₂-, -CF₂CF₂- or -O-;
- said A and B in formula (I) are linked via a sigma bond or a group selected from
- CF₂- or -CF₂CF₂-.

3. Copolymer (P) according to anyone of Claim 1 or 2, wherein each of said first and second PFPE chain, A in formula (I) and said A^ and C^ in formula (IV) is independently a partially or fully fluorinated chain [chain (R_{f})] comprising, preferably consists of, repeating units being independently selected from the group consisting of:
(Rf-i) -CFXO-, wherein X is F or CF₃;
(Rf-ii) -CFXCFXO-, wherein X, equal or different at each occurrence, is F or CF₃, with the proviso that at least one of X is -F;
(Rf-iii) -CF₂CF₂CW₂O-, wherein each of W, equal or different from each other, are F, Cl, H;
(Rf-iv) -CF₂CF₂CF₂CF₂O-;
(Rf-v) -(CF₂)ⱼ-CFZ-O- wherein j is an integer from 0 to 3 and Z is a group of general formula -O-R_{(f-a)}-T, wherein R_{(f-a)} is a fluoropolyoxyalkene chain comprising a number of repeating units from 0 to 10, said recurring units being chosen among the following : -CFXO- , -CF₂CFXO-, -CF₂CF₂CF₂O-, -CF₂CF₂CF₂CF₂O-, with each of X being independently F or CF₃ and T being a C₁-C₃ perfluoroalkyl group.

4. Copolymer (P) according to anyone of the preceding Claims, wherein in
formula (II):
- n is an integer equal to 1 or 2; and/or
- at least one of substituents R1 to R4 is a group of formula (III) as defined in Claim 1 and the other substituents are each independently selected from a fluorine atom or a perfluorinated alkyl chain having from 1 to 3 carbon atoms, more preferably a fluorine atom or a perfluorinated alkyl chain having 1 carbon atoms.

5. Copolymer (P) according to any one of the preceding Claims, wherein in formula (III):
- t is 0; or
- t is 1 and R₁₀ complies with one of the following formulae:
(R₁₀-i) -(CF₂)_{d}(O)ₑ(CF₂O)_{f}R_{CF}(O)_{e*}(CF₂)_{d*}(CF2O)_{f*}
wherein
each of d, d*, e, e*, f and f* is independently zero or 1 and
R_{CF} is a perfluoroalkyl chain comprising from 1 to 12, preferably from 1 to 8 carbon atoms, optionally interrupted by one or more oxygen atoms
(R₁₀-ii) -O-(C₃F₆O)ₕ-(CF₂)ᵢ-(OC₃F₆)ⱼ-O-
wherein h = j and h + j is from 2 to 6, and i is from 2 to 6.

6. Copolymer (P) according to any one of the preceding Claims, wherein in formula (III):
- z is equal to 1 and R₁₀ is an oxygen atom or a bivalent perfluorinated alkyl chain comprising from 1 to 24 carbon atoms, optionally interrupted by and/or comprising at least one oxygen atom; and/or
- one of substituents R₁₁ and R₁₂ is a group of formula (IV) as defined in Claim 1 and the other substituent is selected from a fluorine atom or a perfluorinated alkyl chain having from 1 to 3 carbon atoms; and/or
- one of substituents R₁₃ to R₁₅ is a group of formula (IV) and the other two substituents are independently selected from a fluorine atom or a perfluorinated alkyl chain having from 1 to 3 carbon atoms.

7. Copolymer (P) according to any one of the preceding Claims, wherein in formula (IV):
- a is 1, v is 1 and B^ is a group of formula -[C(R^{1^})(R^{2^})-C(R^{3^})(R^{4^})]- wherein R^{1^} to R^{4^} each independently is selected in the group comprising, preferably consisting of, fluorine atom, perfluorinated linear or branched alkyl group having from 1 to 6 carbon atoms, or group of formula (III) as defined in Claim 1.

8. Copolymer (P) according to any one of the preceding Claims, said copolymer (P) having a complex viscosity, measured at 0.1 rad/s and at 25°C according to ISO 6721 part 10, from 10 Pa*s to 2000 Pa*s.

9. Copolymer (P) according to Claim 1, said copolymer (P) being free from pendant groups comprising moieties capable of undergoing to chemical reaction.

10. A mixture [mixture (P)] comprising two or more copolymers (P) as defined in anyone of Claims 1 to 9.

11. A process [process (P)] for the manufacture copolymer (P) as defined in anyone of Claims 1 to 9 or of mixture (P) as defined in Claim 10, said process comprising the steps of :
a) contacting at least one peroxidic (per)fluoropolyether polymer [PFPE peroxy] comprising a (per)fluoropolyether chain having two chain ends, each of said chain ends comprising a (per)fluorinated alkyl chain having from 1 to 3 carbon atoms, optionally containing one or more chlorine atoms or functional end groups selected from acyl fluoride, fluoroformate and ketones, said chain ends being bonded to opposite sides of said (per)fluoropolyether chain, said (per)fluoropolyether chain comprising, preferably consisting of, repeating units being independently selected from the group consisting of formulae (Rf-i) to (Rf-v) as defined in Claim 3 and having a peroxidic content (PO), defined as grams of active oxygen (Mw = 16) in 100 g of PFPE peroxy between 0.1 and 4,
with at least one perfluorinated compound of formula (III-p): 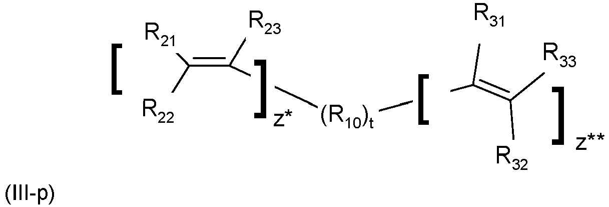
wherein
each of R₂₁ to R₂₃ and R₃₁ to R₃₃ is independently fluorine atom, perfluorinated linear or branched alkyl group having from 1 to 6 carbon atoms,
R₁₀ is an oxygen atom, a perfluorinated linear or branched alkyl group comprising from 1 to 24 carbon atoms, optionally interrupted by and/or comprising at least one oxygen atom,
t is zero or 1, preferably 1;
each of z* and z** is independently 1 or 2;
wherein
the amount of the compound of formula (III-p) is less than 5 wt.% of the amount of the PFPE peroxy;
b) letting the PFPE peroxy and the compound of formula (III) react in the presence of UV radiation or heating;
c) fluorinating, thus obtaining said copolymer (P).

12. Process (P) according to Claim 11, wherein t is 1, and the two, three or four unsaturated moieties are bonded to the same or to different carbon atoms belonging to R₁₀.

13. Process (P) according to Claim 12, wherein said at least one compound of formula (III-p) complies with the following formula:
CF₂=CF(R₁₀)ₜCF=CF₂
wherein
t is zero or 1,
R₁₀ complies with one of the following formulae:
(R₁₀-i) -(CF₂)_{d}(O)ₑ(CF₂O)_{f}R_{CF}(O)_{e*}(CF₂)_{d*}(CF2O)_{f*}
wherein
each of d, d*, e, e*, f and f* is independently zero or 1 and
R_{CF} is a perfluoroalkyl chain comprising from 1 to 12, preferably from 1 to 8 carbon atoms, optionally interrupted by one or more oxygen atoms
(R₁₀-ii) -O-(C₃F₆O)ₕ-(CF₂)ᵢ-(OC₃F₆)ⱼ-O-
wherein h = j and h + j is from 2 to 6, and i is from 2 to 6.

14. Process (P) according to any one of Claims 11 to 13, said process (P) comprising:
- before step (a), a step of partial reduction of the peroxid bonds in the PFPE peroxy, preferably by chemical reduction or UV treatment or thermal treatment; and/or
- after step (c), step (d) of removal of the solvent and/or step (e) of fractionation.

15. A composition [composition (CL)] comprising copolymer (P) as defined in Claims 1 to 9 or mixture (P) as defined in Claim 10, at least one base oil selected in the group comprising partially fluorinated, fully fluorinated and hydrogenated base oils, provided that said base oil is capable of forming a solution with copolymer (P), and optionally at least one additive selected from thickening agents, antirust agents, antioxidants, thermal stabilizers, pour-point depressants, anti-wear agents, including those for high pressures, dispersants, tracers, dyestuffs, talc and inorganic fillers.

16. A method for lubricating at least one surface of at least one article, said method comprising contacting said copolymer (P) as defined in Claim 1 to 9 or said mixture (P) as defined in Claim 10 or said composition (CL) as defined in Claim 14, with said at least one surface.

17. The method of Claim 15, wherein said article is selected from pumps for use in oil and gas applications, such as electrical submersible pump, rotary machines, such as steam turbines and gas turbines; electrical connectors; bearings of fan clutches or cooling fans; or heavy duty truck automatic clutches, more particularly bearings of said clutches.

18. A method for counteract vibrations and/or shocks in a device, said method comprising providing an apparatus comprising a damper device, said damper device comprising at least one copolymer (P) as defined in Claim 1 to 9, or said mixture (P) as defined in Claim 10 or said composition (CL) as defined in Claim 15.

## Patentansprüche

1. Blockcopolymer [Copolymer (P)] mit zwei Kettenenden, wobei beide Kettenenden eine perfluorierte Alkylgruppe umfassen, und umfassend eine erste und eine zweite (Per)fluorpolyetherkette [PFPE-Kette] mit jeweils zwei Kettenenden, wobei das erste Kettenende der ersten und zweiten PFPE-Kette eine perfluorierte Alkylgruppe umfasst und das zweite Kettenende der ersten und zweiten PFPE-Kette über einen Block der Formel (I) aneinander gebunden sind:
(I) -[A-B]-
wobei
(A) für eine PFPE-Kette steht und
(B) für eine Einheit steht, die der folgenden Formel (II) entspricht: 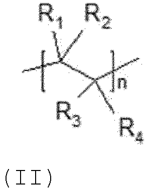 wobei
n für eine ganze Zahl von 1 bis 3 steht;
R₁ bis R₄ jeweils unabhängig ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen, Gruppe der Formel (III):
(III) - (R₁₀)ₜ[C(R₁₁)(R₁₂)-C(R₁₃)(R₁₄)(R₁₅)]_{z}
wobei
R₁₀ für ein Sauerstoffatom oder eine zwei-/drei-/vierwertige perfluorierte Alkylkette mit 1 bis 24 Kohlenstoffatomen, die gegebenenfalls durch mindestens ein Sauerstoffatom unterbrochen ist und/oder mindestens ein Sauerstoffatom umfasst, steht,
t für null oder 1 steht,
z für eine ganze Zahl von 1 bis 3 steht;
R₁₁ bis R₁₅ jeweils unabhängig ausgewählt ist aus der Gruppe, die Folgendes umfasst und vorzugsweise daraus besteht: Fluoratom, perfluorierte lineare oder verzweigte Alkylgruppe mit 1 bis 6 Kohlenstoffatomen und Gruppe der Formel (IV):
-[(A^)ₐ-(B^)ᵥ]-(C^)-T (IV)
wobei
A^ für eine PFPE-Kette steht,
a für null oder 1 steht,
v für null oder eine ganze Zahl von 1 bis 3 steht,
B^ für eine Gruppe der Formel -[C(R^{1^})(R^{2^})-C(R^{3^})(R^{4^})-steht,
wobei R^{1^} bis R^{4^} jeweils unabhängig die oben für R₁ bis R₄ definierte Bedeutung haben,
C^ für eine PFPE-Kette steht und
T für eine perfluorierte Alkylgruppe steht;
wobei:
- das A und B in Formel (I) und das A^ und B^ in Formel (IV) statistisch verteilt sind,
- mindestens eines von R₁ bis R₄ für eine Gruppe der Formel (III) steht,
- eines von R₁₁ oder R₁₂ und eines von R₁₃ bis R₁₅ für eine Gruppe der Formel (IV) steht, wobei a für 1 steht, und
- die Summe von (B + B^) 1 bis 15 beträgt.

2. Copolymer (P) nach Anspruch 1, wobei
- die erste und die zweite PFPE-Kette, das A, A^ , C^ gemäß Anspruch 1 gleich oder voneinander verschieden sind; und/oder
- jede der perfluorierten Alkylgruppen, die gleich oder voneinander verschieden sind, eine lineare Perfluoralkylgruppe mit 1 bis 3 Kohlenstoffatomen ist; und/oder
- die erste PFPE-Kette über eine Sigma-Bindung oder eine Gruppe, die aus -CF₂-, -CF₂CF₂- oder -O- ausgewählt ist, an den mindestens einen Block der Formel (I) gebunden ist; und/oder
- die zweite PFPE-Kette über eine Sigma-Bindung oder eine Gruppe, die aus -CF₂-, -CF₂CF₂- oder -O- ausgewählt ist, an den mindestens einen Block der Formel (I) gebunden ist;
- das A und B in Formel (I) über eine Sigma-Bindung oder eine Gruppe, die aus -CF₂- oder -CF₂CF₂- ausgewählt ist, verknüpft sind.

3. Copolymer (P) nach einem der Ansprüche 1 oder 2, wobei die erste und die zweite PFPE-Kette, A in Formel (I) und das A^ und C^ in Formel (IV) jeweils unabhängig eine teil- oder vollfluorierte Kette [Kette (R_{f})] sind, die Wiederholungseinheiten umfasst oder vorzugsweise aus Wiederholungseinheiten besteht, die unabhängig ausgewählt sind aus der Gruppe bestehend aus:
(Rf-i) -CFXO-, wobei X für F oder CF₃ steht;
(Rf-ii) -CFXCFXO-, wobei X bei jedem Auftreten gleich oder verschieden ist und für F oder CF₃ steht, mit der Maßgabe, dass mindestens eines von X für -F steht;
(Rf-iii) -CF₂CF₂CW₂O-, wobei W jeweils gleich oder voneinander verschieden ist und für F, Cl oder H steht;
(Rf-iv) -CF₂CF₂CF₂CF₂O-;
(Rf-v) -(CF₂)ⱼ-CFZ-O-, wobei j für eine ganze Zahl von 0 bis 3 ist steht Z für eine Gruppe der allgemeinen Formel -O-R_{(f-a)}-T steht, wobei R_{(f-a)} für eine Fluorpolyoxyalkenkette mit einer Zahl von wiederkehrenden Einheiten von 0 bis 10 steht, wobei die wiederkehrenden Einheiten aus den Folgenden ausgewählt sind: -CFXO- , -CF₂CFXO-, -CF₂CF₂CF₂O-, -CF₂CF₂CF₂CF₂O-, wobei jedes von X unabhängig F oder CF₃ ist und T eine C₁-C₃-Perfluoralkylgruppe ist.

4. Copolymer (P) nach einem der vorhergehenden Ansprüche, wobei in Formel (II):
- n für eine ganze Zahl gleich 1 oder 2 steht; und/oder
- mindestens einer der Substituenten R1 bis R4 für eine Gruppe der Formel (III) gemäß Anspruch 1 steht und die anderen Substituenten jeweils unabhängig aus einem Fluoratom oder einer perfluorierten Alkylkette mit 1 bis 3 Kohlenstoffatomen, weiter bevorzugt einem Fluoratom oder einer perfluorierten Alkylkette mit 1 Kohlenstoffatomen, ausgewählt sind.

5. Copolymer (P) nach einem der vorhergehenden Ansprüche, wobei in Formel (III):
- t für 0 steht; oder
- t für 1 steht und R₁₀ einer der folgenden Formeln entspricht:
(R₁₀-i) -(CF₂)_{d}(O)ₑ(CF₂O)_{f}R_{CF}(O)_{e*}(CF₂)_{d*}(CF2O)_{f*}
wobei
d, d*, e, e*, f und f* jeweils unabhängig für null oder 1 stehen und
R_{CF} für eine Perfluoralkylkette mit 1 bis 12 und vorzugsweise 1 bis 8 Kohlenstoffatomen, die gegebenenfalls durch ein oder mehrere Sauerstoffatome unterbrochen ist, steht,
(R₁₀-ii) -O- (C₃F₆O)ₕ-(CF₂)ᵢ-(OC₃F₆)-O-
wobei h = j und h + j gleich 2 bis 6 ist und i für 2 bis 6 steht.

6. Copolymer (P) nach einem der vorhergehenden Ansprüche, wobei in Formel (III):
- z gleich 1 ist und R₁₀ für ein Sauerstoffatom oder eine zweiwertige perfluorierte Alkylkette mit 1 bis 24 Kohlenstoffatomen, die gegebenenfalls durch mindestens ein Sauerstoffatom unterbrochen ist und/oder mindestens ein Sauerstoffatom umfasst, steht; und/oder
- einer der Substituenten R₁₁ und R₁₂ für eine Gruppe der Formel (IV) gemäß Anspruch 1 steht und der andere Substituent aus einem Fluoratom oder einer perfluorierten Alkylkette mit 1 bis 3 Kohlenstoffatomen ausgewählt ist; und/oder
- einer der Substituenten R₁₃ bis R₁₅ für eine Gruppe der Formel (IV) steht und die anderen beiden Substituenten unabhängig voneinander aus einem Fluoratom oder einer perfluorierten Alkylkette mit 1 bis 3 Kohlenstoffatomen ausgewählt sind.

7. Copolymer (P) nach einem der vorhergehenden Ansprüche, wobei in Formel (IV):
- a für 1 steht, v für 1 steht und B^ für eine Gruppe der Formel -[C(R^{1^})(R^{2^})-C(R^{3^})(R^{4^})- steht, wobei R^{1^} bis R^{4^} jeweils unabhängig ausgewählt sind aus der Gruppe, die Folgendes umfasst und vorzugsweise daraus besteht: Fluoratom, perfluorierte lineare oder verzweigte Alkylgruppe mit 1 bis 6 Kohlenstoffatomen oder Gruppe der Formel (III) gemäß Anspruch 1.

8. Copolymer (P) nach einem der vorhergehenden Ansprüche, wobei das Copolymer (P) eine bei 0,1 rad/s und bei 25 °C gemäß ISO 6721 Teil 10 gemessene komplexe Viskosität von 10 Pa*s bis 2000 Pa*s aufweist.

9. Copolymer (P) nach Anspruch 1, wobei das Copolymer (P) frei von Seitengruppen ist, die Gruppierungen umfassen, die eine chemische Reaktion eingehen können.

10. Mischung [Mischung (P)], umfassend zwei oder mehr Copolymere (P) gemäß einem der Ansprüche 1 bis 9.

11. Verfahren [Verfahren (P)] zur Herstellung von Copolymer (P) gemäß einem der Ansprüche 1 bis 9 oder von Mischung (P) gemäß Anspruch 10, wobei das Verfahren die folgenden Schritte umfasst:
a) Inkontaktbringen mindestens eines peroxidischen (Per)fluorpolyetherpolymers [PFPE-Peroxy], das eine (Per)fluorpolyetherkette mit zwei Kettenenden umfasst, wobei jedes der Kettenenden eine (per) fluorierte Alkylkette mit 1 bis 3 Kohlenstoffatomen, die gegebenenfalls ein oder mehrere Chloratome oder funktionelle Endgruppen, die aus Acylfluorid, Fluorformiat und Ketonen ausgewählt sind, enthält, umfasst, wobei die Kettenenden an gegenüberliegende Seiten der (Per)fluorpolyetherkette gebunden sind, wobei die (Per)fluorpolyetherkette wiederkehrende Einheiten, die unabhängig aus der Gruppe bestehend aus den Formeln (Rf-i) bis (Rf-v) gemäß Anspruch 3 ausgewählt sind, umfasst und vorzugsweise daraus besteht und einen Peroxidgehalt (PO), der als Gramm aktiver Sauerstoff (MW = 16) in 100 g PFPE-Peroxy definiert ist, zwischen 0,1 und 4 aufweist,
mit mindestens einer perfluorierten Verbindung der Formel (III-p): 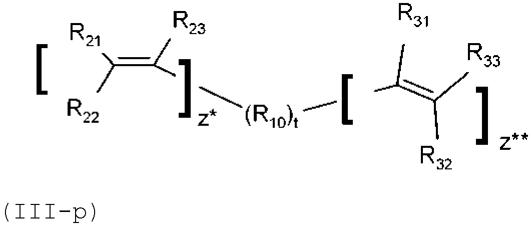
wobei
R₂₁ bis R₂₃ und R₃₁ bis R₃₃ jeweils unabhängig für Fluoratom, perfluorierte lineare oder verzweigte Alkylgruppe mit 1 bis 6 Kohlenstoffatomen stehen,
R₁₀ für ein Sauerstoffatom oder eine perfluorierte lineare oder verzweigte Alkylgruppe mit 1 bis 24 Kohlenstoffatomen, die gegebenenfalls durch mindestens ein Sauerstoffatom unterbrochen ist und/oder mindestens ein Sauerstoffatom umfasst, steht,
t für null oder 1, vorzugsweise 1, steht;
z* und z** jeweils unabhängig für 1 oder 2 stehen;
wobei
die Menge der Verbindung der Formel (III-p) weniger als 5 Gew.-% der Menge des PFPE-Peroxy beträgt;
b) Reagierenlassen das PFPE-Peroxy und der Verbindung der Formel (III) in Gegenwart von UV-Strahlung oder Erhitzen;
c) Fluorieren, wodurch das Copolymer (P) erhalten wird.

12. Verfahren (P) nach Anspruch 11, wobei t für 1 steht und die zwei, drei oder vier ungesättigten Gruppierungen an dasselbe Kohlenstoffatom oder verschiedene Kohlenstoffatome, die zu R₁₀ gehören, gebunden sind.

13. Verfahren (P) nach Anspruch 12, wobei die mindestens eine Verbindung der Formel (III-p) der folgenden Formel entspricht:
CF₂=CF(R₁₀)ₜCF=CF₂
wobei
t für null oder 1 steht,
R₁₀ einer der folgenden Formeln entspricht:
(R₁₀-i) -(CF₂)_{d}(O)ₑ(CF₂O)_{f}R_{CF}(O)_{e*}(CF₂)_{d*}(CF2O)_{f*}
wobei
d, d*, e, e*, f und f* jeweils unabhängig für null oder
1 stehen und
R_{CF} für eine Perfluoralkylkette mit 1 bis 12 und vorzugsweise 1 bis 8 Kohlenstoffatomen, die gegebenenfalls durch ein oder mehrere Sauerstoffatome unterbrochen ist, steht,
(R₁₀-ii) -O-(C₃F₆Oₕ-(CF₂)ᵢ-(OC₃F₆)ⱼ-O-
wobei h = j und h + j gleich 2 bis 6 ist und i für 2 bis 6 steht.

14. Verfahren (P) nach einem der Ansprüche 11 bis 13, wobei das Verfahren (P) Folgendes umfasst:
- vor Schritt (a) einen Schritt der teilweisen Reduktion der Peroxidbindungen in dem PFPE-Peroxy, vorzugsweise durch chemische Reduktion oder UV-Behandlung oder thermische Behandlung; und/oder
- nach Schritt (c) Schritt (d) der Entfernung des Lösungsmittels und/oder Schritt (e) der Fraktionierung.

15. Zusammensetzung [Zusammensetzung (CL)], umfassend ein Copolymer (P) gemäß den Ansprüchen 1 bis 9 oder eine Mischung (P) gemäß Anspruch 10, mindestens ein Grundöl, das aus der Gruppe umfassend teilfluorierte, vollfluorierte und hydrierte Grundöle ausgewählt ist, mit der Maßgabe, dass das Grundöl in der Lage ist, mit Copolymer (P) eine Lösung zu bilden, und gegebenenfalls mindestens ein Additiv, das aus Verdickungsmitteln, Rostschutzmitteln, Antioxidantien, Wärmestabilisatoren, Pourpoint-Erniedrigern, Verschleißschutzmitteln, einschließlich solcher für hohe Drücke, Dispergiermitteln, Tracern, Farbstoffen, Talkum und anorganischen Füllstoffen ausgewählt ist.

16. Verfahren zum Schmieren mindestens einer Oberfläche mindestens eines Gegenstands, wobei das Verfahren das Inkontaktbringen des Copolymers (P) gemäß Anspruch 1 bis 9 oder der Mischung (P) gemäß Anspruch 10 oder der Zusammensetzung (CL) gemäß Anspruch 14 mit der mindestens einen Oberfläche umfasst.

17. Verfahren nach Anspruch 15, wobei der Gegenstand ausgwählt ist aus Pumpen zur Verwendung bei Öl- und Gasanwendungen, wie elektrischen Tauchpumpen, Rotationsmaschinen, wie Dampfturbinen und Gasturbinen; elektrischen Verbindern; Lagern von Lüfterkupplungen oder Kühlventilatoren oder automatischen Kupplungen für Schwerlastfahrzeuge, insbesondere Lagern der Kupplungen.

18. Verfahren zum Entgegenwirken von Schwingungen und/oder Stößen in einer Vorrichtung, wobei das Verfahren das Bereitstellen einer Vorrichtung mit einer Dämpfervorrichtung umfasst, wobei die Dämpfervorrichtung mindestens ein Copolymer (P) gemäß Anspruch 1 bis 9 oder die Mischung (P) gemäß Anspruch 10 oder die Zusammensetzung (CL) gemäß Anspruch 15 umfasst.

## Revendications

1. Copolymère séquencé [copolymère (P)] comportant deux extrémités de chaîne, chacune desdites deux extrémités de chaîne comprenant un groupe alkyle perfluoré, et comprenant une première et une seconde chaîne (per)fluoropolyéther [chaîne PFPE] ayant chacune deux extrémités de chaîne. La première extrémité de chaîne desdites première et deuxième chaînes PFPE comprenant un groupe alkyle perfluoré et la deuxième extrémité desdites première et deuxième chaînes PFPE étant liées l'une à l'autre par un bloc de formule (I) :
(I) -[A-B]-
dans laquelle
(A) est une chaîne PFPE, et
(B) est un fragment selon la formule (II) suivante : 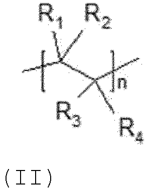 dans laquelle
n est un entier de 1 à 3 ;
R₁ à R₄, chacun indépendamment, est choisi dans le groupe comprenant, de préférence constitué par, un atome de fluor, un groupe alkyle perfluoré linéaire ou ramifié ayant de 1 à 6 atomes de carbone, un groupe de formule (III) :
(III) - (R₁₀)ₜ[C(R₁₁)(R₁₂)-C(R₁₃)(R₁₄)(R₁₅)]_{z}
dans laquelle
R₁₀ est un atome d'oxygène, ou une chaîne alkyle perfluorée bi-/tri-/tétravalente comprenant de 1 à 24 atomes de carbone facultativement interrompue par et/ou comprenant au moins un atome d'oxygène,
t est zéro ou 1,
z est un entier de 1 à 3 ;
R₁₁ à R₁₅, chacun indépendamment, sont choisis dans le groupe comprenant, de préférence constitué par, un atome de fluor, un groupe alkyle perfluoré linéaire ou ramifié ayant de 1 à 6 atomes de carbone, un groupe de formule (III) :
-[(A^)ₐ-(B^)ᵥ]-(C^)-T (IV)
dans laquelle
A^ est une chaîne PFPE,
a^ est zéro ou 1,
v est zéro ou est un entier de 1 à 3,
B^ est un groupe de formule - [C(R^{1^})(R^{2^})-C(R^{3^})(R^{4^})-dans laquelle R^{1^} à R^{4^}, chacun indépendamment, ont la signification définie ci-dessus pour chacun parmi R₁ à R₄,
C^ est une chaîne PFPE, et
T est un groupe alkyle perfluoré ;
dans lequel :
- lesdits A et B dans la formule (I) et lesdits A^ et B^ dans la formule (IV) sont distribués statistiquement,
- au moins l'un de R₁ à R₄ est un groupe de formule (II),
- l'un de R₁₁ ou R₁₂ et l'un de R₁₃ à R₁₅, est un groupe de formule (IV) dans lequel a est 1, et
- la somme de (B + B^) est de 1 à 15.

2. Copolymère (P) selon la revendication 1, dans lequel
- lesdites première et deuxième chaînes PFPE et lesdits A, A^, C^ tels que définis dans la revendication 1, sont identiques ou différents ; et/ou
- chacun desdits groupes alkyle perfluorés, identiques ou différents, est un groupe perfluoroalkyle linéaire comprenant de 1 à 3 atomes de carbone ; et/ou
- ladite première chaîne PFPE est liée audit au moins un bloc de formule (I) par une liaison sigma ou un groupe choisi parmi -CF₂-, -CF₂CF₂- ou -O- ; et/ou
- ladite deuxième chaîne PFPE est liée audit au moins un bloc de formule (I) par une liaison sigma ou un groupe choisi parmi -CF₂-, -CF₂CF₂- ou -O- ;
- lesdits A et B dans la formule (I) sont liés par une liaison sigma ou un groupe choisi parmi -CF₂- ou -CF₂CF₂-.

3. Copolymère (P) selon l'une quelconque des revendications 1 ou 2, dans lequel chacune desdites première et deuxième chaînes PFPE, A dans la formule (I) et A^ et C^ dans la formule (IV) est indépendamment une chaîne partiellement ou totalement fluorée [chaîne (R_{f})] comprenant, de préférence constituée par, des motifs répétitifs choisis indépendamment dans le groupe constitué par :
(Rf-i) -CFXO-, où X est F ou CF₃ ;
(ii) -CFXCFXO-, où X, identique ou différent à chaque occurrence, est F ou CF₃, à condition qu'au moins l'un des X soit -F ;
(iii) -CF₂CF₂CW₂O-, où chaque W, identique ou différent des autres, est F, Cl, H ;
(Rf-iv) -CF₂CF₂CF₂CF₂O- ;
(Rf-v) - (CF₂)ⱼ-CFZ-O- où j est un entier de 0 à 3 et Z est un groupe de formule générale -O-R_{(f-a)}-T, où R_{(f-a)} est une chaîne fluoropolyoxyalkène comprenant un nombre de motifs répétitifs de 0 à 10, lesdits motifs répétitifs étant choisis parmi : -CFXO-, -CF₂CFXO-, -CF₂CF₂CF₂O-, - CF₂CF₂CF₂CF₂O-, chaque X étant indépendamment F ou CF₃ et
T étant un groupe perfluoroalkyle en C₁-C₃.

4. Copolymère (P) selon l'une quelconque des revendications précédentes, dans lequel, dans la formule (II) :
- n est un entier égal à 1 ou 2 ; et/ou
- au moins l'un des substituants R1 à R4 est un groupe de formule (III) tel que défini dans la revendication 1 et les autres substituants sont chacun choisis indépendamment parmi un atome de fluor ou une chaîne alkyle perfluorée ayant de 1 à 3 atomes de carbone, plus préférentiellement un atome de fluor ou une chaîne alkyle perfluorée ayant 1 atome de carbone.

5. Copolymère (P) selon l'une quelconque des revendications précédentes, dans lequel, dans la formule (III) :
- t est 0 ; ou
- t est 1 et R₁₀ correspond à l'une des formules suivantes :
(R₁₀-i) -(CF₂)_{d}(O)ₑ(CF₂O)_{f}R_{CF}(O)_{e*}(CF₂)_{d*}(CF2O)_{f*}
dans laquelle
chacun parmi d, d*, e, e*, f et f* est indépendamment zéro ou 1 et
R_{CF} est une chaîne perfluoroalkyle comprenant de 1 à 12, de préférence de 1 à 8 atomes de carbone, facultativement interrompue par un ou plusieurs atomes d'oxygène
(R₁₀-ii) -O-C₃F₆O)ₕ-(CF₂)ᵢ-(OC₃F₆)ⱼ-O-
dans laquelle h = j et h + j est de 2 à 6, et i est de 2 à 6.

6. Copolymère (P) selon l'une quelconque des revendications précédentes, dans lequel, dans la formule (III) :
- z est égal à 1 et R₁₀ est un atome d'oxygène ou une chaîne alkyle perfluorée bivalente comprenant de 1 à 24 atomes de carbone, facultativement interrompue par et/ou comprenant au moins un atome d'oxygène ; et/ou
- l'un des substituants R₁₁ et R₁₂ est un groupe de formule (IV) tel que défini dans la revendication 1 et l'autre substituant est choisi parmi un atome de fluor ou une chaîne alkyle perfluorée comprenant de 1 à 3 atomes de carbone ; et/ou
- l'un des substituants R₁₃ et R₁₅ est un groupe de formule (IV) et les deux autres substituants sont choisis parmi un atome de fluor ou une chaîne alkyle perfluorée ayant de 1 à 3 atomes de carbone.

7. Copolymère (P) selon l'une quelconque des revendications précédentes, dans lequel, dans la formule (IV) :
- a est 1, v est 1 et B^ est un groupe de formule - [C(R^{1^})(R^{2^})-C(R^{3^})(R^{4^})]-, dans laquelle R^{1^} à R^{4^} sont chacun indépendamment choisis dans le groupe comprenant, de préférence constitué par, un atome de fluor, un groupe alkyle perfluoré linéaire ou ramifié ayant de 1 à 6 atomes de carbone, ou un groupe de formule (III) tel que défini dans la revendication 1.

8. Copolymère (P) selon l'une quelconque des revendications précédentes, ledit copolymère (P) présentant une viscosité complexe, mesurée à 0,1 rad/s et à 25 °C selon l'ISO 6721 partie 10, de 10 Pa*s à 2 000 Pa*s.

9. Copolymère (P) selon la revendication 1, ledit copolymère (P) étant exempt de groupes pendants comprenant des fragments susceptibles de subir une réaction chimique.

10. Mélange [mélange (P)] comprenant au moins deux copolymères (P) tels que définis dans l'une quelconque des revendications 1 à 9.

11. Procédé [procédé (P)] de fabrication du copolymère (P) tel que défini dans l'une quelconque des revendications 1 à 9 ou du mélange (P) tel que défini dans la revendication 10, ledit procédé comprenant les étapes consistant à :
a) mettre en contact au moins un polymère de (per)fluoropolyéther peroxydique [PFPE peroxydique] comprenant une chaîne (per)fluoropolyéther ayant deux extrémités, chacune desdites extrémités de chaîne comprenant une chaîne alkyle (per)fluorée ayant de 1 à 3 atomes de carbone, contenant facultativement un ou plusieurs atomes de chlore ou des groupes terminaux fonctionnels choisis parmi le fluorure d'acyle, le fluoroformiate et des cétones, lesdites extrémités de chaîne étant liées aux extrémités opposées de ladite chaîne (per)fluoropolyéther, ladite chaîne (per)fluoropolyéther comprenant, de préférence constituée par, des motifs répétitifs choisis indépendamment dans le groupe constitué par les formules (Rf-i) à (Rf-v), telles que définies dans la revendication 3 et ayant une teneur en peroxyde (PO), définie en grammes d'oxygène actif (Mw = 16) dans 100 g de PFPE peroxydique, comprise entre 0,1 et 4,
avec au moins un composé perfluoré de formule (III-p) : 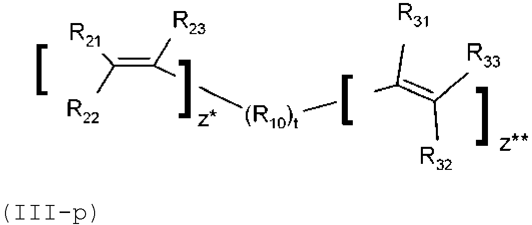
dans laquelle
chacun de R₂₁ à R₂₃ et R₃₁ à R₃₃ est indépendamment un atome de fluor, un groupe alkyle perfluoré linéaire ou ramifié ayant de 1 à 6 atomes de carbone,
R₁₀ est un atome d'oxygène, ou une chaîne alkyle perfluorée linéaire ou ramifiée comprenant de 1 à 24 atomes de carbone, facultativement interrompue par et/ou comprenant au moins un atome d'oxygène,
t vaut zéro ou 1, préférablement 1 ;
chacun de z* et z** est indépendamment 1 ou 2,
dans lequel
la quantité du composé de formule (X-p) est inférieure à 5 % en poids de la quantité de PFPE peroxy ;
b laisser le PFPE peroxy et ledit composé de formule (X-p) réagir en présence de rayonnement UV ou de chauffage ;
c) fluorer, de façon à obtenir ledit copolymère (P).

12. Procédé (P) selon la revendication 11, dans lequel t est égal à 1 et les deux, trois ou quatre fragments insaturés sont liés au même atome de carbone ou à des atomes de carbone différents appartenant à R₁₀.

13. Procédé (P) selon les revendications 12, dans lequel ledit au moins un composé de formule (III-p) correspond à la formule suivante :
CF₂=CF(R₁₀)ₜCF=CF₂
dans laquelle
t est zéro ou 1,
R₁₀ correspond à l'une des formules suivantes :
(R₁₀-i) -(CF₂)_{d}(O)ₑ(CF2O)_{f}R_{CF}(O)_{e*}(CF₂)_{d*}(CF2O)_{f*}
dans laquelle
chacun parmi d, d*, e, e*, f et f* est indépendamment zéro ou 1 et
R_{CF} est une chaîne perfluoroalkyle comprenant de 1 à 12, de préférence de 1 à 8 atomes de carbone, facultativement interrompue par un ou plusieurs atomes d'oxygène
(R₁₀-ii) -O-(C₃F₆O)ₕ-(CF₂)ᵢ-(OC₃F₆)ⱼ-O-
dans laquelle h = j et h + j est de 2 à 6, et i est de 2 à 6.

14. Procédé (P) selon l'une quelconque des revendications 11 à 13, ledit procédé (P) comprenant :
- avant l'étape (a), une étape de réduction partielle des liaisons peroxydes du PFPE peroxy, de préférence par réduction chimique, traitement UV ou traitement thermique ; et/ou
- après l'étape (c), une étape (d) d'élimination du solvant et/ou une étape (e) de fractionnement.

15. Composition [composition (CL)] comprenant le copolymère (P) tel que défini dans l'une quelconque des revendications 1 à 9 ou le mélange (P) tel que défini dans la revendication 10, au moins une huile de base choisie dans le groupe comprenant des huiles de base partiellement fluorées, entièrement fluorées et hydrogénées, à condition que ladite huile de base soit capable de former une solution avec le copolymère (P), et facultativement au moins un additif choisi parmi des agents épaississants, des agents antirouille, des antioxydants, des stabilisants thermiques, des améliorants de point d'écoulement, des agents anti-usure, y compris ceux pour hautes pressions, des dispersants, des traceurs, des colorants, le talc et des charges inorganiques.

16. Procédé de lubrification d'au moins une surface d'au moins un article, ledit procédé comprenant la mise en contact dudit copolymère (P) tel que défini dans les revendications 1 à 9, ou dudit mélange (P) tel que défini dans la revendication 10, ou de ladite composition (CL) telle que définie dans la revendication 14, avec ladite ou lesdites surfaces.

17. Procédé selon la revendication 15, dans lequel ledit article est choisi parmi des pompes destinées à être utilisées dans des applications pétrolières et gazières, telles que des pompes électriques submersibles, des machines rotatives, telles que des turbines à vapeur et des turbines à gaz ; des connecteurs électriques ; des roulements d'embrayages de ventilateur ou de ventilateurs de refroidissement ; ou des embrayages automatiques pour poids lourds, plus particulièrement les roulements desdits embrayages.

18. Procédé pour amortir les vibrations et/ou les chocs dans un dispositif, ledit procédé comprenant la fourniture d'un appareil comprenant un dispositif amortisseur, ledit dispositif amortisseur comprenant au moins un copolymère (P) tel que défini dans les revendications 1 à 9, ou ledit mélange (P) tel que défini dans la revendication 10 ou ladite composition (CL) telle que définie dans la revendication 15.
